# EUROPEAN PATENT SPECIFICATION

(11) **EP 3 044 113 B1**
(45) Date of publication and mention of the grant of the patent: **13.06.2018**
(21) Application number: 13815555.1
(22) Date of filing: 09.09.2013
(51) Int. Cl.: B65D 75/00, B65D 81/34

(54) **BAG, INCORPORATING A HEATING OR COOLING DEVICE, FOR A FLUID OR SOLID SUBSTANCE AND USES OF THE BAG**
BEUTEL MIT EINER INTEGRIERTEN HEIZ- ODER KÜHLVORRICHTUNG FÜR EINEN FLÜSSIGEN ODER FESTEN STOFF UND VERWENDUNGEN DES BEUTELS
SAC COMPRENANT UN DISPOSITIF DE CHAUFFAGE OU DE REFROIDISSEMENT INCORPORÉ POUR UNE SUBSTANCE LIQUIDE OU SOLIDE ET UTILISATIONS DU SAC

(43) Date of publication of application: 20.07.2016
(73) Proprietor: Brusatori, Carlo, 6517 Arbedo (CH); Radosavljevic, Srecko, 6500 Bellinzona (CH)
(72) Inventor: Brusatori, Carlo, 6517 Arbedo (CH); Radosavljevic, Srecko, 6500 Bellinzona (CH)
(74) Representative: Riccardi, Sergio
(86) International application number: PCT/IB2013/001948
(87) International publication number: WO 2015/033179

(56) References cited:
- WO-A1-2005/120315
- WO-A1-2012/038819
- FR-A1- 2 967 757

## Description

This invention refers to a disposable supple thermal container shaped like an envelope or bag auto-heating or auto-cooling.
It finds use in various applications: in the food, medical, pharmaceutical, free time, recreation, sport, hobby, do-it-yourself, military field as well as for humanitarian assistance and interventions, disaster interventions and so on.
The supple thermal container with embodied internal thermal exchange subject of this invention is shaped like an envelope or bag with double pocket, one to contain the consumer product, the other to safe contain the reaction chamber. The pocket intended to contain the reaction chamber is made by folding a single sheet.
It is a question of a handy disposable dispenser of a consumer product with the need of heating or cooling, exploiting exothermic or endothermic reactions produced by pressure breaking of a bag containing the reaction liquid which comes into contact with the reacting chemical product, said process occurring into the reaction chamber. The peculiarity of this design is that thanks to the double pocket the reaction chamber is fully separated from the consumer product, causing a noticeable safety level dramatically increased in comparison with the products of the know technique already in use with "bag in bag" or "bag in bag in bag" concept.
The container is provided with a double-function valve, that means performing its duty at the same time for the pocket containing the reaction chamber as well as for the pocket containing the consumer product, with the aim to control a possible excessive pressure generated by the chemical reaction or by an incorrect dosage of the chemical product or in case of an incorrect use of the container. The consumption of the product occurs through a spout, protected by a cap or through tear opening.
Thanks to the above-described innovations, the container subject of this invention opposes and solves the drawbacks of the previous products of the known technique.
The Patent EP18966343, even if it introduces for the first time the concept of an endothermic pocket-size supple container, still results too primitive by its design with too many separate compartments inducing handling difficulty and limits to the alimentary safety being the immersed reaction chamber adjacent to the space containing the consumer product.
The Patent Application PCT/IB2011/002223 (and the corresponding European EP2619279, basis for the preamble of claim 1) introduces the cascade multi-chamber concept with dedicated spaces one into the other, each dedicated to a defined function: reagent, reaction liquid, reaction chamber, consumer product; nevertheless the alimentary safety is not assured in case of break of the chamber due to overpressure, even with the addition of the valve placed on the bottom because the reaction chamber rips fundamentally on the seams in particular the lateral ones.
The Patent Application PCT WO 2012/113479 represents a pure infringement of the previous one from the point of view on the innovative principle, while from the drawings and the claims it seems to be lacking of the fundamental characteristics of the flexibility, because the claimed elasticity of the material does not necessarily require a flexibility of the packaging and does not exclude its rigidity. The present invention provides a container according to claim 1, methods of manufacturing it according to claims 8 and 9 and uses according to claims 10-13. This invention refers to a handy supple container with internal thermal exchange for dispensing thermally pre-treated substances, heated or cooled, whose innovative characteristic resides in the fact that the element building the reaction chamber containing the thermal charge is inserted from the side or from the bottom in a safety pocket built by folding a sheet inside the pocket for the consumer product, which is built by the walls of the said container.
The new aim is not to build the envelope or pocket by folding a sheet only to allow interchangeability/recharge but instead essentially to avoid the contact between consumer product and reaction chamber, which are isolated exactly by the interposed pocket containing the reaction chamber.
Unlike the findings of the known technique, which have the reaction chamber immersed in the consumer product to improve the thermal effect, the peculiarity of this idea is that, in our case, the reaction chamber, besides not be immersed in the consumer product, is further shielded by the interposed intermediate safety pocket; in fact the aim is exactly to avoid this through the interposition between consumer product and reaction chamber of a pocket containing the reaction chamber.

More precisely the finding subject of this invention refers to a portable, handy, supple thermal container for self-service consumable preparations, including inside an auto-heating or auto-cooling thermal charge, composed of a pocket, envelope or bag containing the consumer product, separated means containing the reagent and the chemical reaction product, with calibrated release and coupling, means or walls to separate the reaction product and the products for preparation and consumption, characterized by the fact that said thermal supple container with embodied internal thermal exchange, is shaped like an envelope or bag with double pocket, one to contain the consumer product, the other to contain the reaction chamber, the pocket intended to contain the reaction chamber being built by folding a sheet.

The portable, handy, supple thermal container for self-service consumable preparations it is characterized by the fact that the element building the thermal reaction chamber, which contains the package of the chemical reagents or thermal charge, is placed in a separated safety pocket, built by folding inside the pocket a sheet joining at its ends to the end edges of the said pocket.

Said element building the reaction chamber and containing the thermal charge is inserted from the side or from the bottom in a safety pocket built by folding a sheet inside the pocket for the consumer product, this latter built by the sheet of the walls of said container.

Said element containing the thermal reaction chamber, which contains the package of the chemical reagents, is made by a pocket built by folding inside a point of the pocket an extended strip of a bag-shaped sheet, joining itself at its ends respectively to the end edges of the sheet building the pocket of the consumer product, to obtain said pocket, to build a stand-up container with lateral loading.

In a different way of execution the element containing the thermal reaction chamber, which contains the package on the chemical reagents, is made by a pocket built by joining inside the pocket of the consumer product the edges of a bag-shaped sheet, joining itself at its ends to the end edges of the sheet building the pocket of the consumer product, respectively, to obtain said pocket, to build a container shaped as envelope or bag with bottom loading. The reaction chemical product is in the form of pastilles or capsules or tablets or wafers covered by a protective layer, with calibrated trigger and reaction with gradual, extended, uniform and controlled release of the thermal effect, while the container of the reagent is a bubble of non-evaporable and/or antifreeze liquid, collapsible by calibrated stress along a predetermined breaking line, pressure activated with uniform, progressive and total release of the liquid to generate an improved and increased thermal effect, even if a smaller amount of chemical product is utilised.
The anti-deflagration safety valve of the reaction chamber is bivalent for the pocket of the consumer product and that one containing the reaction chamber and is arranged along a lateral edge of the container to prevent their prevalent lateral break or collapse and can also simply be made by a calibrated draft of the seams arranged on a point along the lateral edge of said pockets.

Said container of the invention is characterized by the fact that said supple container is shaped like a supple, deformable, handy, portable envelope or bag, which can be activated by calibrated stress with independent reaction chamber, isolated by means of the interposed pocket for the alimentary and/or operational safety.

Said container finds peculiar use and application for self-service consumer preparations in supple, handy and safe packaging for filling with fluid substances of every type and viscosity, particularly foods, also solid, edible and non-edible liquids.

More precisely further characteristics of this finding subject of the invention are related to:

### 1. Form of the chemical reagent

Instead of utilising the chemical component as loose powder, by the new finding subject of this invention said chemical component is arranged as pills, pastilles, cylindrical or otherwise shaped capsules, tablets and so on, with the following significant advantages:
a) higher precision of the dosage
b) noticeable reduction of the possible influx of the humidity of the air, being possible to protect the reagent in protected form of tablets with protective layer or capsules or wafers; greater rapidity of execution of the reaction chamber (facilitation of the industrial process); easy preservation in the production process or in case the company provide only the reaction chamber to the customers at their turn producers of the consumer product, who should build themselves the envelope and perform the filling in their premises, receiving the reaction chamber built by a third party;
c) development of the chemical reaction in a more gradual way, allowing the user to contain the envelope in his hand awaiting the consumption, without risk of scalds or nuisance for the too high temperature; instead with the previous system the heat grows quickly and in the time elapsing up to the heat transfer to the consumer product it is annoying to contain in the hand the envelope; furthermore this allows the consumer to choose whether to consume the product at the highest temperature or at a lower for him more agreeable temperature;
d) the final temperature reached by the chemical reaction keeps longer, improving times and ways of consumption of the product.

### 2. Bubble with liquid

By the finding subject of this invention the container of the reagent liquid do not break by chance and in the material itself, but in the seam purposely designed, so that also this generates a more gradual, more measurable with respect to the temperature gap to be reached and more complete thermal reaction, being the breaking/opening more specific, more precise, more uniform and fully.

This allows arranging it inside its pocket whether horizontally or vertically, making easier and more precise the manufacturing (the industrial phase).

Furthermore the user can easy understands whether the opening/breaking has occurred or not, while by the executions of the previously known technique, besides the drawback that the bubble of the liquid could even not break, was more difficult to understand immediately whether this had occurred and furthermore between an envelope and the other the feeling could be quite different, so increasing the uncertainty about the occurred breaking and making the use less pleasant.

The adjustment of the seam according to the pressure to be exerted to perform the opening is clearly more precise and more effective.

Our opening/breaking ensures that the whole of the liquid flows out the bubble because it opens on a whole side; this gives the certainty that the whole of the liquid flows out the bubble and goes to interact with the chemical product; instead previously because of the immediate solidification of the chemical product and the possible only partial flow of the liquid from its cell, it happened that not the whole of the liquid went to interact to develop the chemical reaction fully or in the same way or at the same speed, causing a number of uncertainties or greater uncertainty on the effectiveness or possibly also less effectiveness of the reaction itself.

Previously for the other types, besides to make less attractive the product due to the uncertainty induced in the user about the reached temperature and the heating times, this made also uncertain, clearly more difficult or nearly impossible to precisely measure out the thermal gap; all this negatively influencing the use and the marketing of the final product.

Said solution of the invention on the contrary allows adjusting with appreciable precision the thermal gap, allowing creating envelopes with higher thermal gap to individualize/adapt the use to the external meteorological conditions, the custody place, the way of use and the contained product. Furthermore, it serves to check the reached temperatures when we make products that have to become only lukewarm or have a set temperature

### 3. Safety valve

The safety valve 6 is absolutely positioned on the side of the envelope, that means where it is joined 1"', preferably in a point situated approximately at the height of 1/2 of the pocket 3 containing the reaction chamber 4, that means at about 1/4 of the length of the external envelope, calculated starting from the basis of the envelope, on both sides or on the left or right side.

By such containers of the known technique, the safety valve was described as additional element, without specifications on the positioning and the relevant efficiency. On the contrary as result of a conscious performed testing it was evident that the envelopes break (in case of incorrect use and therefore of increase of the internal pressure) always laterally. A valve placed on the bottom or on the top of the envelope is then not practically and significantly effective, because the lateral collapse of the seams occurs beforehand.

In the executions of the known technique, the valve was indicated as added/applied element to the reaction chamber; this is useless because the problem of a blowing up comes after the activation of the reaction chamber.

The safety valve can also perform the function of marker if suitably highlighted or coloured.

In this case it serves also to control the sorting for the sale and the transportation and for the delivery to the consumer and to allow him on one hand to differentiate the personal use and the handover to his family, mainly to his children, and on the other increasing the safety level for everybody, avoiding risks of burns and so on. According to the use and then to the conditions of basis temperature one is facing up to, one will choose which container to take with him and use.

In this way one avoids that the envelopes can be mistaken. Furthermore, risks of burns are reduced as well as risks of insufficient heating because of too low external temperature with respect to the heating gap generated by the reaction chamber.

### ENVELOPE MODELS

1. stand-up envelopes
2. standard envelopes, preferably for food
3. with different colour band according to the desired/optimum thermal gap and/or content
the above distinction is not limiting and the characteristics of the various models are combinable each other.

We give now here below a description of some salient ways of execution of this finding with reference to the attached drawings without moreover depriving of anything the generality of the invention itself.
- The Figure 1 shows a view of the container of the invention representing its internal components in the case of lateral insertion of the reaction chamber and bubble with liquid arranged horizontally, in its stand-up way of execution;
- The Figure 1a shows a view of the container of the invention representing its internal components in the case of lateral insertion of the upturned reaction chamber and bubble with liquid arranged vertically, in its stand-up way of execution;

- The Figure 2 shows the way of lateral insertion of the reaction chamber with bubble of liquid arranged horizontally in the dedicated housing pocket of the container of the invention in its stand-up execution way;
- The Figure 2a shows the way of lateral insertion of the upturned reaction chamber with bubble of liquid arranged vertically in the dedicated housing pocket of the container of the invention in its stand-up execution way;
- The Figure 3 highlights a frontal view of the container of the invention with lateral insertion of the reaction chamber in its stand-up way of execution;
- The Figure 4 represents a lateral cross-section of the previous one along the line IV-IV;
- The Figure 5 describes a cross-section perspective view of the container of the invention with lateral insertion of the reaction chamber into the dedicated housing pocket, in its stand-up way of execution;
- The Figure 6 shows the sheets for building the pocket of the consumer product with lateral insertion of the reaction chamber, together with the sheet for building the housing pocket of the reaction chamber in its execution way of the stand-up container;
- The Figures 6a, 6c describe the way to build the housing pocket of the reaction chamber in case of container with lateral insertion of the reaction chamber in its stand-up way of execution;
- The Figure 6b represents a detail enlargement of the lower part of the previous figure 6a highlighting the contact points, seams, of the lower edges of the sheets building the pocket of the consumer product and the airtight housing pocket of the reaction chamber;
- The Figure 7 represents a cross-section perspective view of the assembly container, pocket for the consumer product, insertion/housing pocket of the reaction chamber, reaction chamber highlighting its components, in its stand-up execution way;
- The Figure 8 shows a view of the container of the invention representing the internal components of the container in case of bottom insertion of the reaction chamber and bubble with reaction liquid arranged horizontally, in its standard way of execution;
- The Figure 8a shows a view of the container of the invention representing the internal components of the container in case of bottom insertion of the upturned reaction chamber and bubble with reaction liquid arranged vertically, in its standard way of execution;
- The Figure 9 illustrates the way of bottom insertion of the reaction chamber with bubble of the reaction liquid arranged horizontally in its dedicated housing pocket of the container of the invention in its standard execution way;
- The Figure 9a illustrates the way of bottom insertion of the upturned reaction chamber with bubble of the reaction liquid arranged vertically in its dedicated housing pocket of the container of the invention in its standard execution way;
- The Figure 10 shows the sheets for building the pocket of the consumer product of the container of the invention with bottom insertion of the reaction chamber, together with the sheet for building the housing pocket of the reaction chamber, in its standard way of execution;
- The Figure 11 highlights a frontal view of the container of the invention with bottom insertion of the reaction chamber in its standard way of execution;
- The Figure 12 represents a lateral cross-section of the previous one along the line XI-XI;

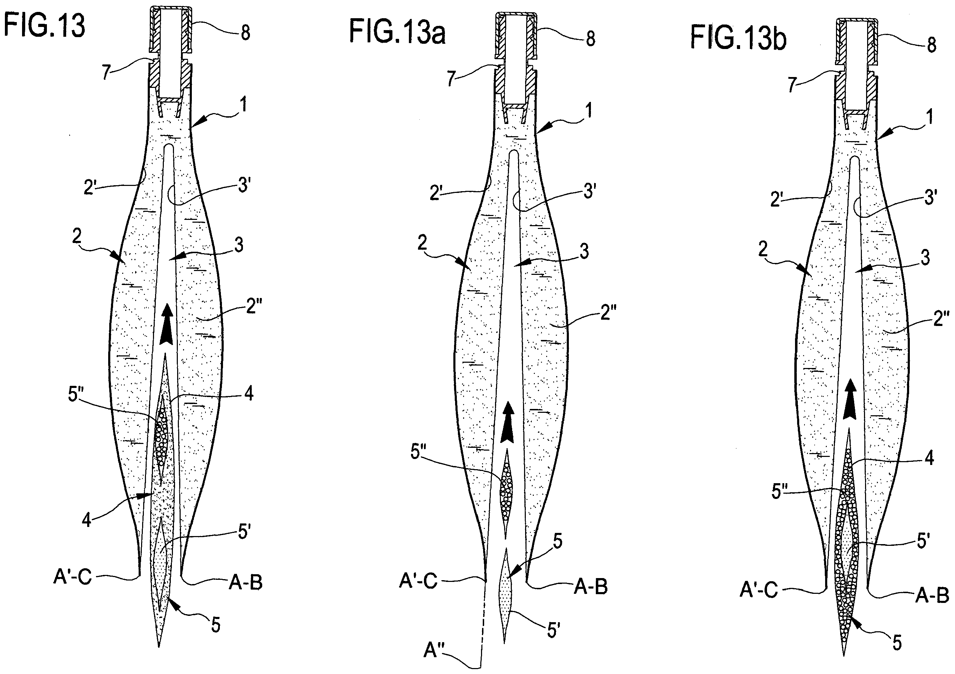

- The Figures 13, 13a, and 13b show the bottom insertion of the reaction chamber in the housing pocket, respectively in the three possible ways of execution, of reagent and reaction liquid contain in an independent reaction chamber, of loose reagent and reaction liquid housed in a pocket made by the extension of the sheet building the pocket of the consumer product, and of a bubble of reaction liquid contained inside the reagent into the reaction chamber, in case of a container in its standard version;

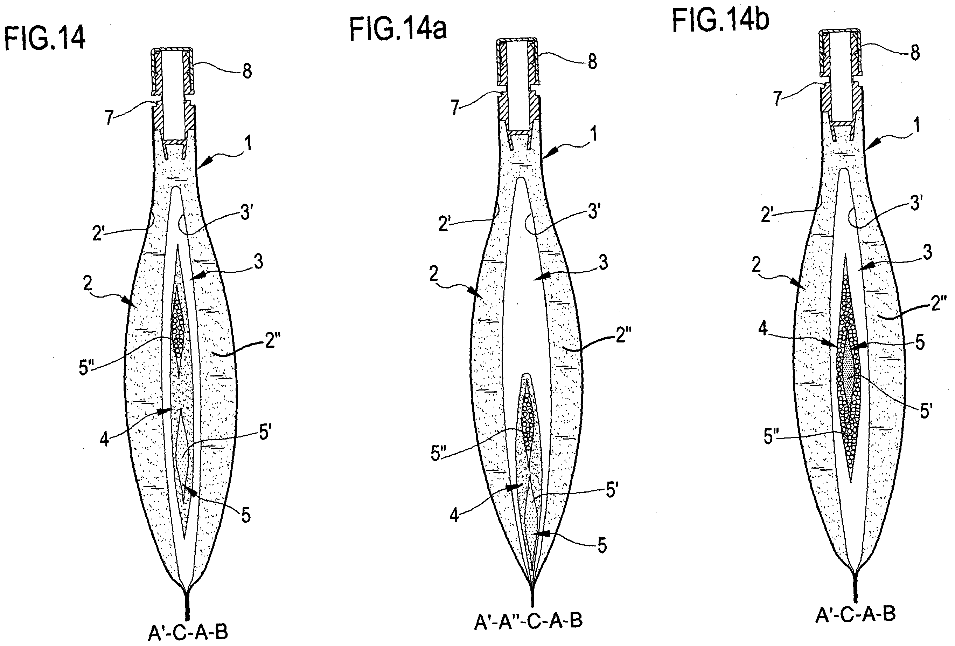

- The Figures 14, 14a and 14b represent respectively the corresponding previous figures with end edges of the various pockets joined after the completion of the bottom loading of the reaction chamber, and container completed, in case of a container in its standard version.

The supple thermal container 1 with incorporated internal thermal exchange through the lateral or bottom insertion of a reaction chamber 4 is shaped like double-pocket envelope or bag, one pocket 2 containing the consumer product 2", the other 3 containing the reaction chamber 4.
The pocket 3 intended to contain the reaction chamber 4 is built by folding a single sheet 3' introduced inside the sheet 2' building the pocket 2 of the consumer product 2" and airtight joined to it along the end edges of said sheets 2', 3'.
It is a matter of a disposable handy dispenser for a consumer product, which needs heating or cooling.
This occurs, exploiting endothermic or exothermic reactions generated by pressure breaking of a calibrated bag 5 containing the reaction liquid 5', which consequently mix itself with the reagent substance 5" causing the desired endo/exothermic reaction.

The peculiarity of this idea is that thanks to the presence of the double pocket the reaction chamber 4 is fully isolated from the consumer product 2", which so can not be contaminated because of the interposition of the pocket 3 between the reaction chamber 4 and the pocket 2 containing the consumer product 2", generating a noticeable safety level dramatically increased with respect to the known containers of the previous type.
The container 1 is provided with a lateral arranged 1"' double-function valve 6, that means that it performs its function at the same time for the pocket 2 and the pocket 3 with the aim to control a possible excessive pressure generated by the chemical reaction into the reaction chamber 4, or an overheating of the consumer liquid into the pocket 2 with production of vapours and overpressures on the spout 7 and cap 8.

### EXAMPLE 1 - STAND-UP Container

This particular preferred way of execution of the finding subject of this invention shows the superior characteristic to be able to stand like a bottle or carton and to remain upright avoiding the overflow of the consumer product even with open cap and consequent handling and consumption comfort.

The container 1 includes
- Pocket 2 for the consumer product built by the sheet 2';
- Consumer product 2";
- Pocket 3 containing the reaction chamber built by folding the sheet 3';
- Reaction chamber 4;
- Bag 5 containing the reaction liquid 5' with pre-set breaking zone 10 or 11;
- Reaction liquid 5';
- Chemical reagents 5" in form of pills, capsules or other;
- Cumulative overpressure safety valve 6 purposely serving as marker;
- Spout 7 with cap 8;
- Draft area or line 9 for tear opening of the container bag;
- Seam 1"' for tight sealing on top and along the lateral outline of the container;
- Sealing and supporting feet 1', 1" allowing the container to stand upright, built by folding the sheet 3' whose edges are joined to those of the sheet 2' of the container of the consumer product.

The container 1 in its stand-up version includes a pocket 2 containing the consumer liquid 2", housing inside an airtight pocket 3 containing in turn a deformable reaction chamber 4 provided with two compartment 5, 5', one 5 of whose with airtight walls with controlled collapse.

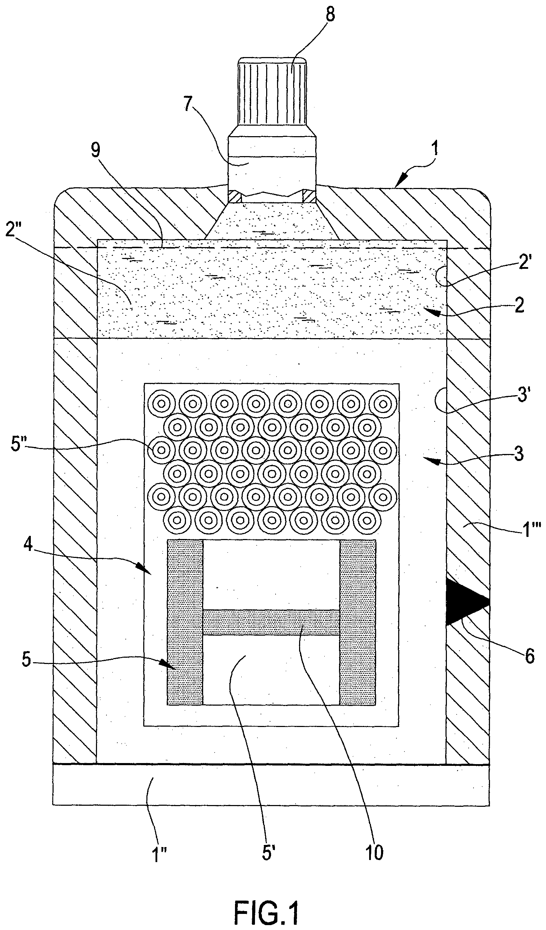

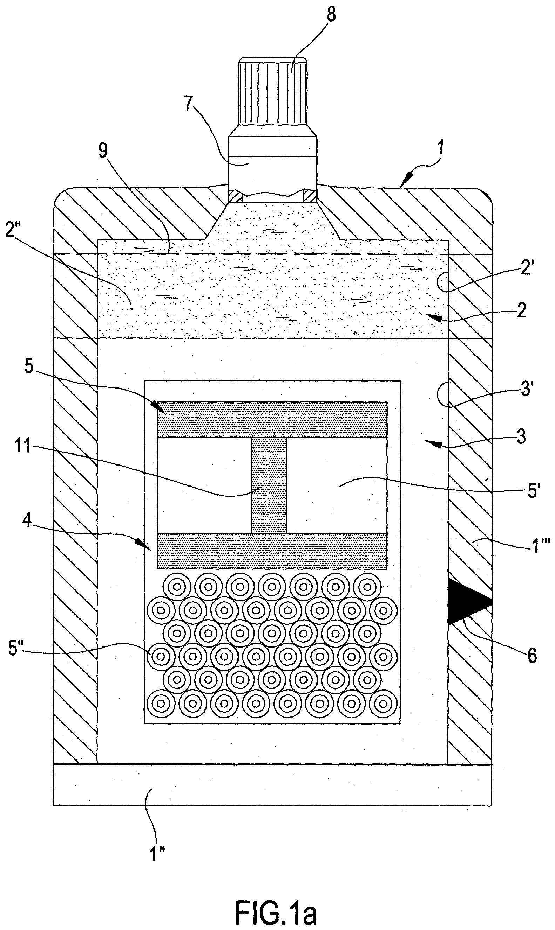

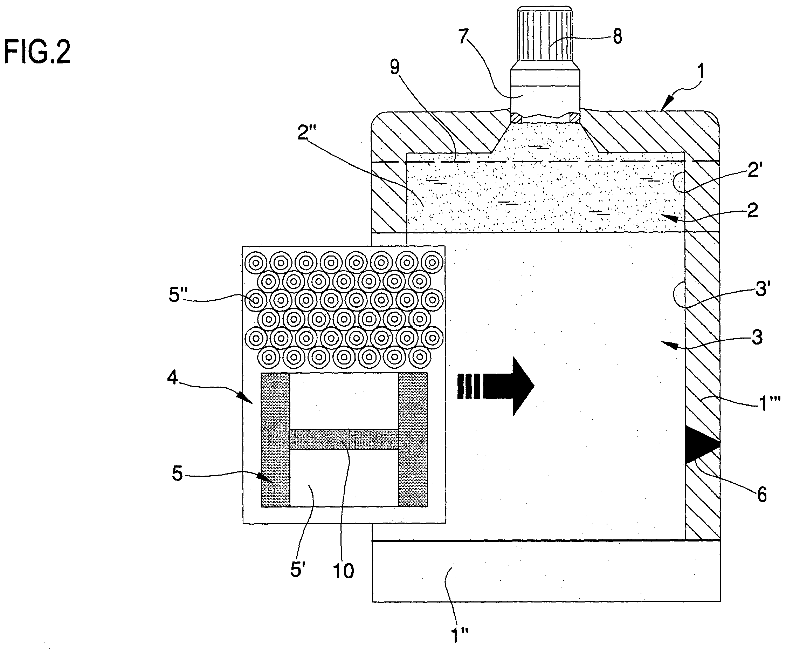

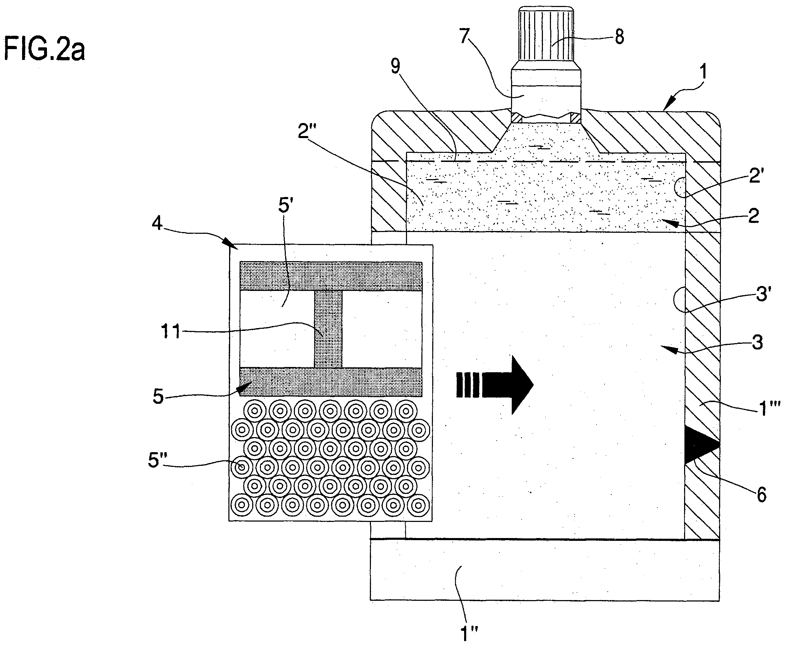

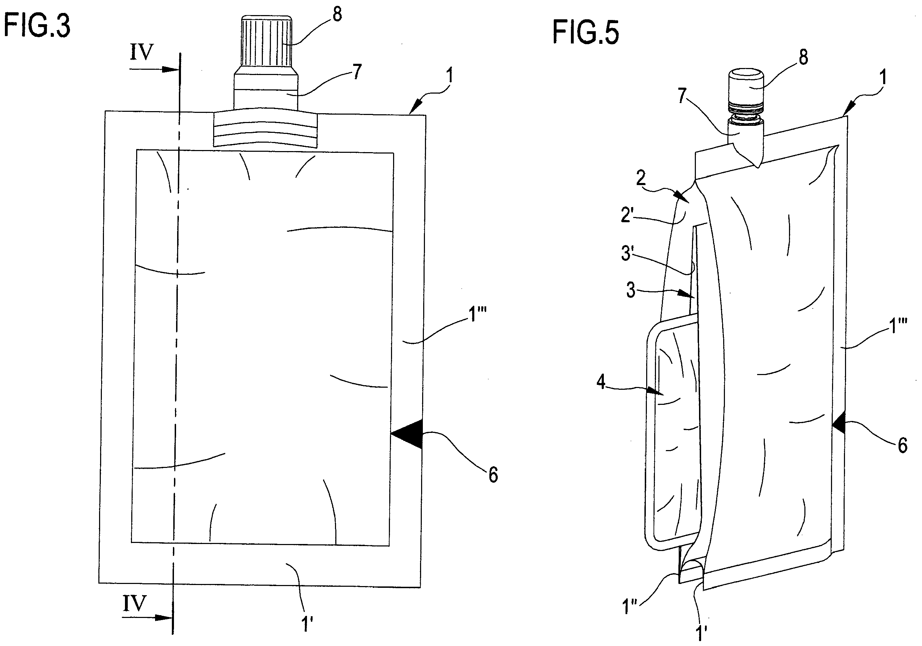

Said reaction chamber 4 is provided of an internal compartment with a reaction element, bag 5 with reaction liquid 5', with calibrated pressure breaking along its seams 10 or 11 according to their horizontal or vertical arrangement, and with a reagent element 5", chemical reaction product: the liquid 5' flows out when the operation is started and comes in contact with the reagent 5", which is in form of pastilles, tablets, capsules, wafers and similar, triggering the endo/exothermic reaction. Figures 1, 1a.
The reaction chamber 4 is introduced laterally into the pocket 3 to create an airtight barrier between reaction products from 5' and 5" and consumer product 2". Figures 2, 2a, 5.
The pocket 2 is built by joining (typically seaming) the outline edges 1', 1", 1"' of a sheet 2'. Figures 3, 5.

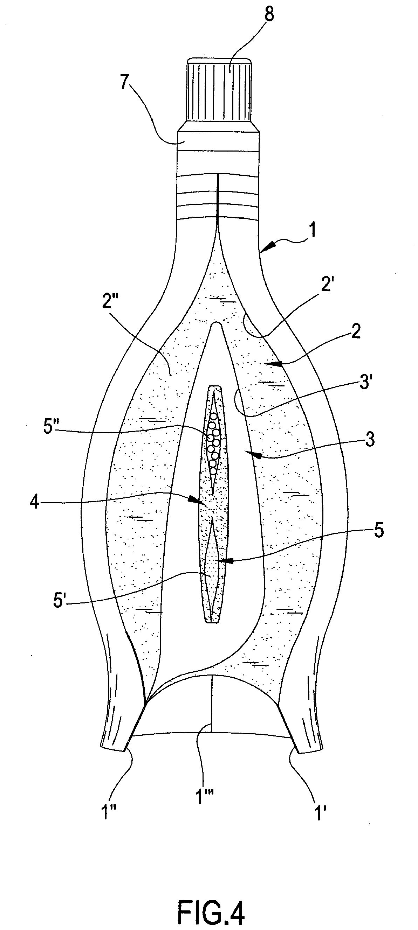

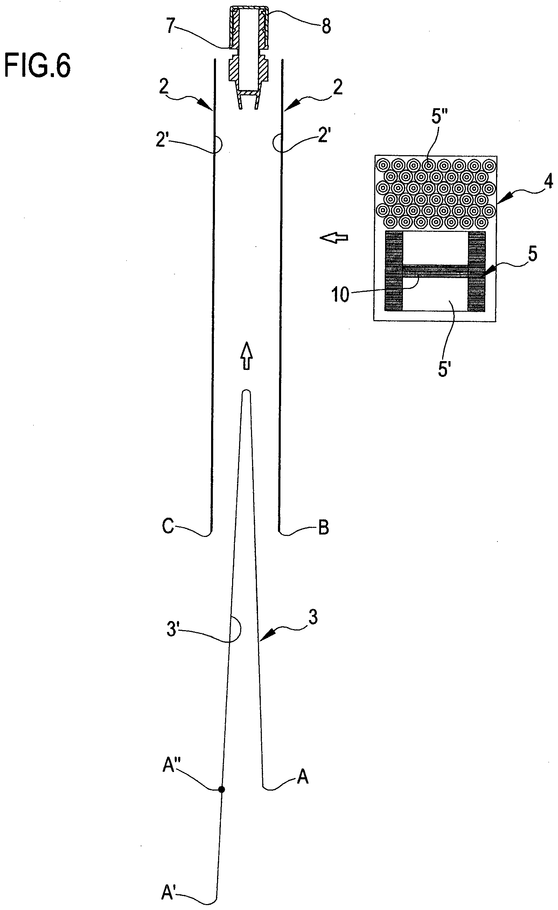

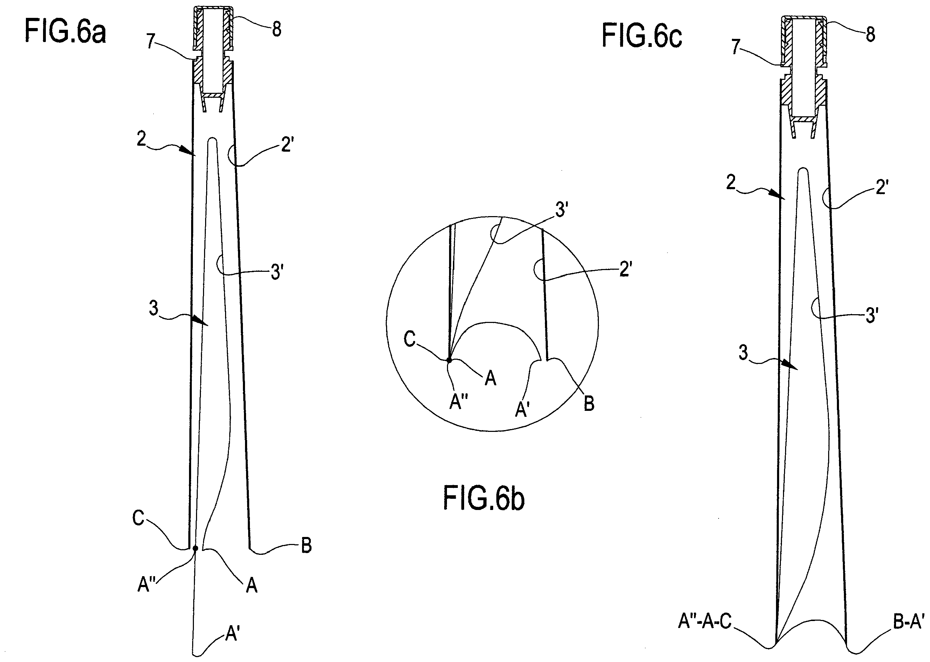

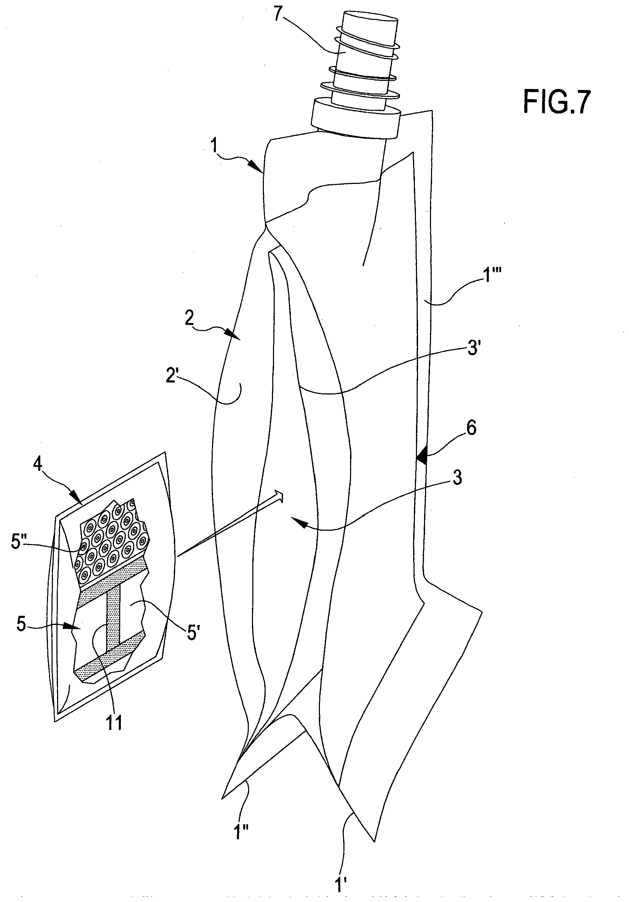

The safety pocket 3, which contains the reaction chamber 4, is arranged interposed inside the pocket 2 containing the consumer product 2" and it is built by folding a sheet 3', so that it shows two strips of different length B and A"-A' respectively; said pocket 3 being built by folding inside the pocket 2 at its point A" the long edge A"-A' of said sheet 3', which joins at its ends A', A to the end edges B, C of the sheet 2' building the pocket 2, respectively at A'-B and A-A"-C to build the pocket 3 and at the same time the stand-up container 1. Figures 6, 6a, 6b, 6c.
Joining in this way the said edges of the sheets 2' and 3', we obtain in the same way the supporting feet 1', 1" of the container 1 of the invention in the stand-up version. Figures 4, 5, 7.
Into the pocket 3 built in this way the reaction chamber 4 is inserted, provided with the reaction means 5-5' (bag with reaction liquid) and 5" (reagent). Figures 4, (cross-section Figure 3), 5.
The dotted part on the edges and on the middle of the bag or bubble with liquid 5 of the reaction chamber 4 represents the seams with calibrated collapse. Figures 1, 1a, 2, 2a, 6, 7.
A safety valve 6, laterally arranged at about 1/3 - 1/4 of the height of the container 1, serves to avoid any breaking, burs, and violent outflow of the overpressure liquids or vapours and serves at the same time both pockets 2 and 3. Figures 1, 1a, 2, 2a, 3, 5, 7.
The safety valve 6 is absolutely positioned on the side of the envelope, that means where it is seamed 1"', preferably in a point situated approximately at the height of 1/2 of the pocket 3 containing the reaction chamber 4, that means at about 1/4 of the length of the external envelope, calculated starting from the basis of the envelope, on both sides or on the left or right side.
Finally the container 1 is also provided with a spout 7 applied flexibly on the top of the pocket 2 and covered by a closure cap 8 for the consumption of the inside contained product 2".
In fact, the neck of the spout 7 is not fully covered by the cap 8 because it is applied on the container in a flexible way.
The opening, from which the reaction chamber is then introduced, is shown in the front or perspective views. Figures 2, 2a, 5, 6, 7.
In the cross section IV-IV it can be seen how the pocket 3 containing the reaction chamber 4 is arranged on the side because it is just fixed on a single wall. Figure 3, 4. Furthermore from the cross section it is clear that, contrary to the front views that could be misleading, because it could appear that on the side of the pocket 3 with the reaction chamber 4, inside the container 1, the pocket 2 containing the consumer product 2" should not be present; in fact the pocket 2 is present on both sides like a normal envelope. Figure 4, 6a, 6c.
Always with reference to the stand-up version we specify that the pocket 3 containing the reaction chamber 4, on the side opposite to its seam to the internal wall of the container 1, that means to the internal wall 2' of the pocket 2 containing the consumer product 2", low, that means at the bottom of the container 1, shows one of its internal walls 3' of the sheet 3, building the pocket 3 for the reaction chamber 4, of longer length A"-A', which is folded and seamed on its folding point A" to itself together with its other wall A together with the wall C of the pocket 2, while the remaining longer part in excess A"-A' goes on building the arch bottom of the stand-up envelope, which is joined by seaming of its end edge A' on the other side to the external and internal wall B of the pocket 2 of the container 1, building a whole with the seam and building the arch bottom of the container 1, allowing meanwhile the lower edges 1', 1" to build its supporting basis which lets the whole container 1 stand upright when placed on a horizontal surface. Figures 6, 6a, 6b, 6c, 7. The pocket 3 containing the reaction chamber 4 is then arranged on the side because is just fixed on an only wall. Figure 4, 6a, 6b, 6c.
It is also worth to highlight that the reaction chamber 4 can be arranged also upturned; in fact according to the type of consumer product or to other needs (in particular for the stand-up envelope where it is expected that the user activates it for the consumption and instead of holding it in hand, puts it on the table waiting for the completion of the thermal reaction and the subsequent stand-by consumption); the fact to have the reaction chamber in upturned position, that is with the liquid on the upper part which will go down by gravity on the chemical product at the time of the break of the separation barrier inside the reaction chamber, can further ease the contemporaneous and homogenous quicker diffusion of the liquid on the chemical product, effect which can be already obtained in itself shaking the container, as recommended in the directions for use and because of the pastilles have already the aim and the effect to favour said homogeneity and contemporaneity of generation and diffusion of the thermal effect.

For what concerns the safety valve 6, its various functions and the use of the container we refer to what was said above.

### EXAMPLE 2 - STANDARD container as envelope or bag

It includes the following elements:
- Pocket 2 for the consumer product built by the sheet 2';
- Consumer product 2";
- Pocket 3 containing the reaction chamber built by the sheet 3';
- Reaction chamber 4;
- Bag 5 containing the reaction liquid 5' with preset breaking zone 10 ο 11;
- Reaction liquid 5';
- Chemical reagents 5" in form of pastilles, capsules or other;
- Cumulative overpressure safety valve 6, purposely serving also as marker;
- Spout 7 and cap 8;
- Draft area or line 9 for tear opening of the container bag;
- Airtight seam 1"' of the container;
- Edges B-C and A-A' respectively of the pockets of the consumer product and of the container of the reaction chamber, building first the opening for the introduction of the reaction chamber from bottom and then the seal for the subsequent closure.

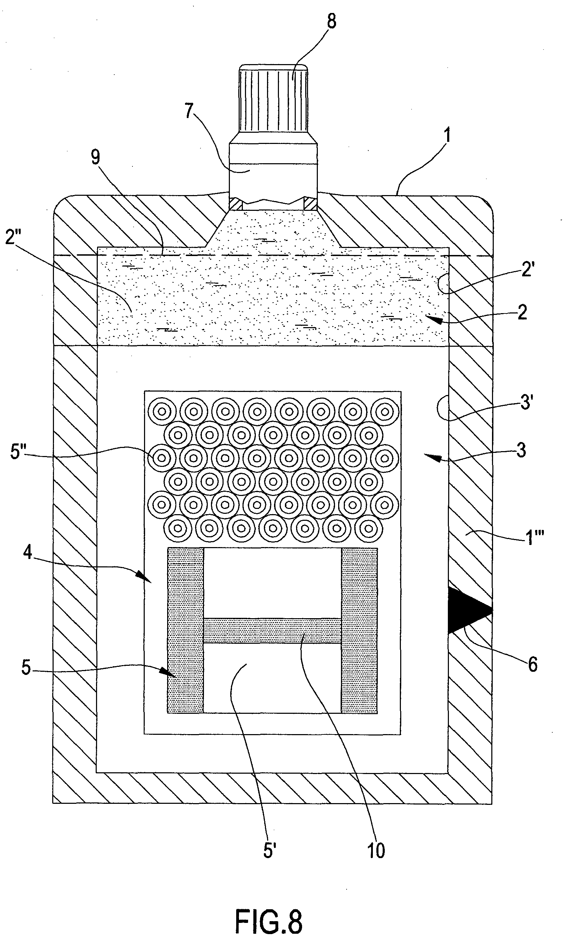

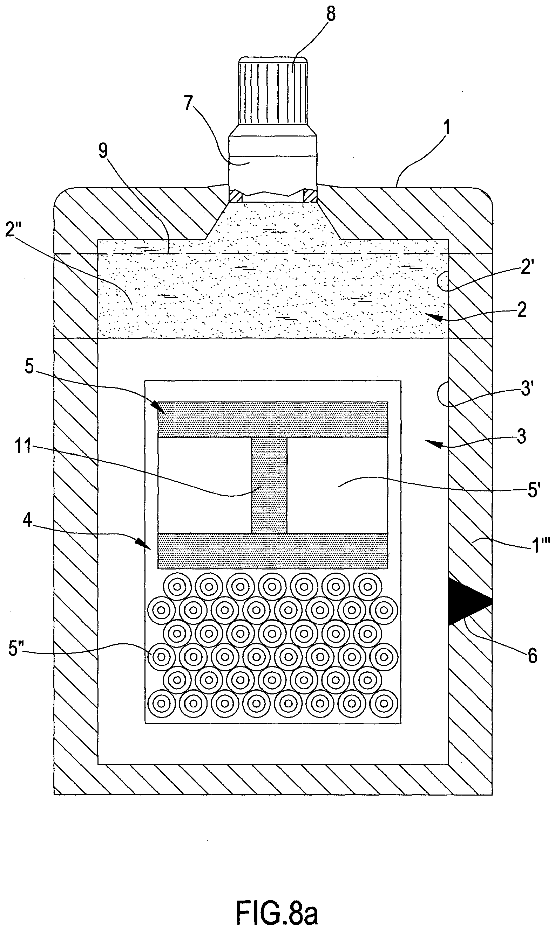

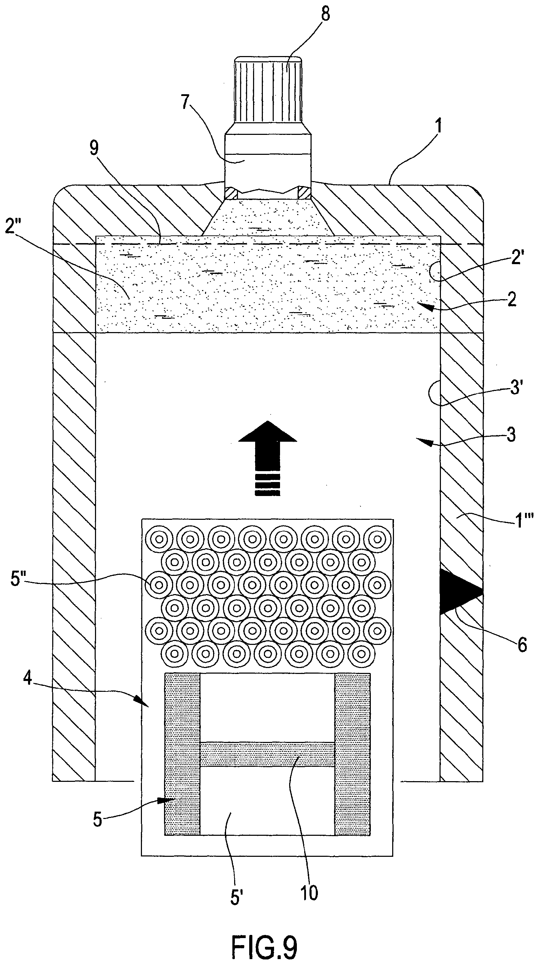

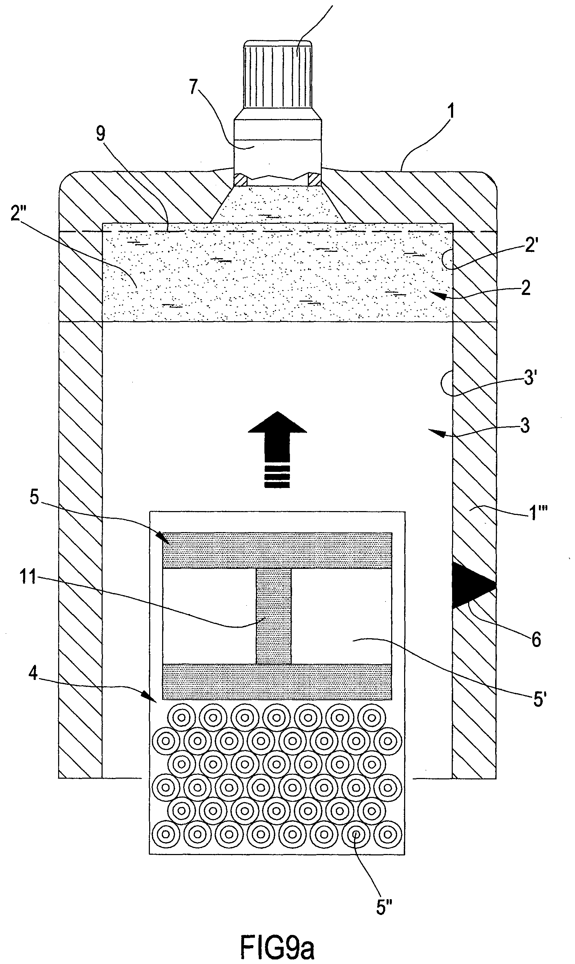

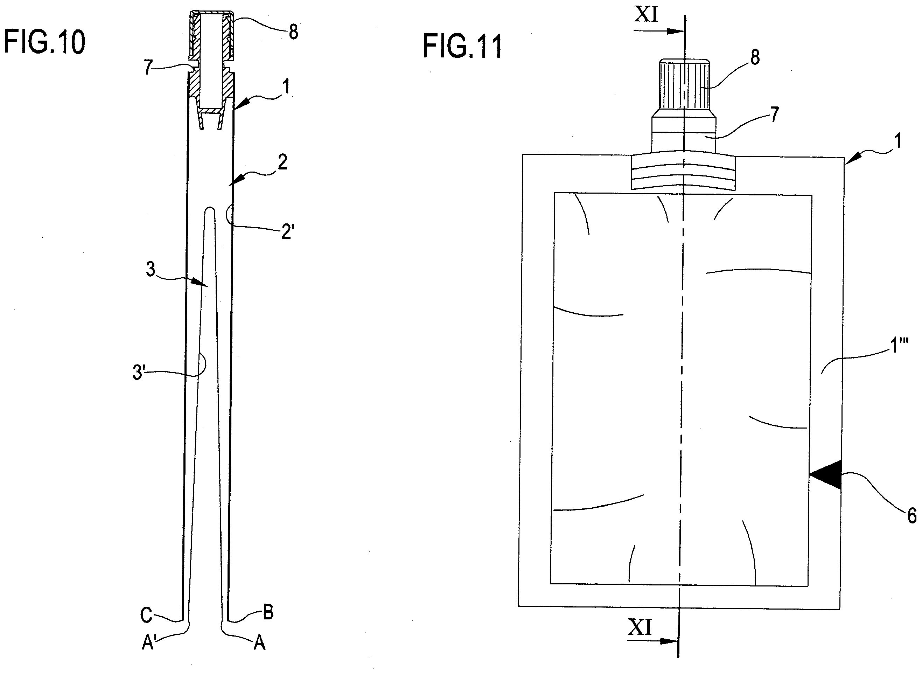

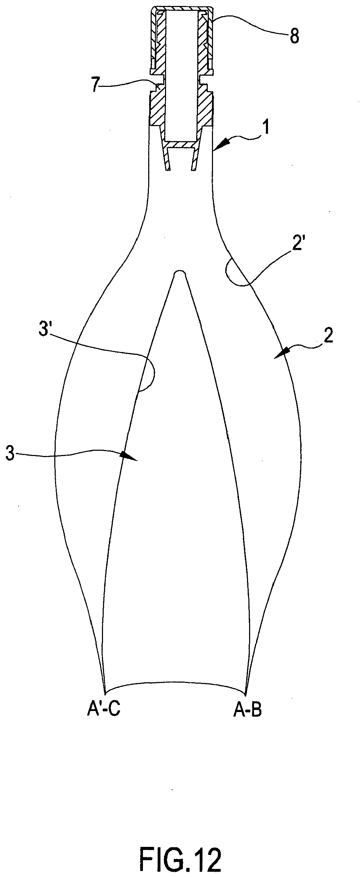

By this execution of the standard envelope container which is preferably suitable for foods or other creamy or sticky products, alimentary or not, the reaction chamber is fixed (seamed, then double seaming point) on both the walls of the pocket 3 containing the reaction chamber 4. Figures 10, 12, (cross-section XI-XI Figure 11), 13, 13a, 13b, and 14, 14a, 14b.
Purpose of the intermediate pocket 3 containing the reaction chamber 4 is not really to obtain interchangeable cartridges: that is the new aim is not to make an interposed envelope just to allow interchangeability/recharge, but mainly to avoid contact between consumer product and reaction chamber. Figures 8, 8a, 9, 9a.
As described in the Figures 8a, 9a, the reaction chamber 4 can be also arranged upturned, this is also possible for the standard container.
Also for the standard envelope container subject of this way of execution, the pocket 3 intended to house the reaction chamber 4 is built by folding a sheet 3', whose edges A-A' go fist to join to the edges B-C of the sheet 2' building the pocket 2 of the consumer product and then to join all together with airtight closure B-A -- A'-C, after the reaction chamber 4 has been introduced from bottom and arranged. Figures 10, 12, (cross-section XI-XI Figure 11), 13a, 13b, 14, 14a, 14b.
Also by this way of execution of the invention the container is provided with a double-function valve 6, that means that it performs its function at the same time for the pocket 2 and the pocket 3 with the aim to control a possible excessive pressure, generated by the chemical reaction in the reaction chamber 4, preventing its deflagration in case of incorrect use of the product or incorrect dosage of the chemical reagent. Figures 8, 8a, 9, 9a, 11.
It is interesting to note also in this version, that the secondary use of the valve 6 is that of refracting coloured marker replacing the various bands of different colour used according to the desired/optimum thermal gap or other coloured visual indicator to differentiate the heating power, so that to "customize" and make more effective and more safe the use according to the basis temperature.

### Intended utilization

The container of this invention is a supple, portable, handy and safe container and is suitable for a number of uses and applications, in particular as disposable dispenser of a consumer and/or necessity product, like soft drinks and drinkables, restoring, energy-giving, tonic, refreshing beverages and liquid foods for sport and free time; drinkable and liquid foods, sauces, creams and seasonings; baby foods, use as baby's bottle and dispensers by nourishing; cosmetics, body care applications, beauty, thermal and wellbeing treatments; ready-to-use medicine packets for drugs, therapeutics, adjuvant drugs, administrations of therapeutic preparations and alimentary integrators for the health; provisioning rations and sanitary equipment for the Army; products, provisioning and first-aid goods for the disaster intervention civil force and the humanitarian interventions; industrial and construction products (like adhesives, sealing means, putties, plasters, paints, compounds and so on); hobby and do-it-yourself products, needing a minimum or preset temperature for their application/use.
Furthermore, said container replaces the thermal envelope in the supermarkets being able to carry frozen goods for a certain time from the dealer to the consumer, for instance milk, drinks or other goods.
Finally, said container is suitable for future applications for packaging for aerospace use: drinks, liquid and soluble foods, drinkable or sanitary water, creams, medicines and so on.
The finding subject of this invention represents a radical innovation in the field of the handy dispensers of "ready-to-carry, ready-to-use" preparations, both from the technical point of view for the introduced increased safety means and for the introduced revolutionary effects on the consumer habits and on the market.

## Claims

1. Portable, handy, supple thermal container (1),for self-service consumable preparations, including inside an auto-heating or auto-cooling thermal charge, composed of a first pocket (2), envelope or bag containing the consumer product (2"), a reaction chamber (4) containing a reagent (5") and a chemical reaction product (5'), with calibrated release and coupling, means or walls to separate the reaction product from the products for preparation and consumption, said thermal supple container (1) with embodied internal thermal exchange being shaped like an envelope or bag with a second pocket (3) formed interposed within a first pocket (2), said first pocket (2) to contain the consumer product (2"), said second pocket (3) to contain the reaction chamber (4), the second pocket (3) intended to contain the reaction chamber being built by folding a sheet (3'), said thermal supple container (1) having a top side carrying a sprout (7), a bottom side opposite to said top side and two lateral sides extending between said top side and said bottom side, **characterized in that** said thermal supple container (1) comprises a safety valve (6) intended to control a possible excessive pressure generated in the reaction chamber (4) or an overheating of the consumer product in the first pocket with production of vapours, said safety valve performing its function at the same time for both the first and second pockets (2, 3), and **in that** said safety valve (6) is arranged along at least one of said lateral sides of the container (1) to prevent the prevalent lateral breaking or collapse of the said pockets.

2. Portable, handy, supple thermal container (1) according to Claim 1, **characterized in that** said safety valve (6) is positioned along said at least one lateral side at a point situated approximately at the height of 1/2 of said second pocket (3) intended to contain the reaction chamber, that means at about 1/4 of the length of said container (1), starting from its bottom side.

3. Portable, handy, supple thermal container (1) according to Claim 1 or 2, **characterized in that** said safety valve (6) is made by a calibrated draft of the seams arranged at a point along said lateral side of the first and second pockets (2) and (3) of the container (1).

4. Portable, handy, supple thermal container (1) according to Claim 1, **characterized in that** said reaction chamber (4), which contains said reagent (5") and said chemical reaction product (5'), is housed in said second pocket (3), which is built by a sheet (3') folded inside the first pocket (2) and joined at its end to the end edges of said first pocket (2).

5. Portable, handy, supple thermal container (1) according to any one of the preceding Claims, **characterized in that** the reaction chamber (4) is inserted from the side or from the bottom into said second pocket (3).

6. Portable, handy, supple thermal container (1) according to any one of the preceding Claims, **characterized in that** the chemical reaction product (5") is in form of pastilles or capsules or tablets or wafers covered by a protective layer.

7. Portable, handy, supple thermal container (1) according to any one of the preceding Claims, **characterized in that**, and that the reagent (5') is housed in a container (5) and **in that** the container (5) of the reagent (5') is a bubble of non-evaporable and/or antifreeze liquid, collapsible by calibrated stress along a predetermined breaking line.

8. Method for manufacturing a portable, handy, supple thermal container (1) according to any of the Claims 1 to 7, comprising the steps of:- folding a first sheet (2') so as to obtain to a first pocket (2) having two strips of the same length ending with respective end edges (B, C);
- folding a second sheet (3') so as to obtain a second pocket (3) having two strips of different length ending with respective end edges (A, A');
- inserting the folded second sheet (3') into the folded first sheet (2');
- joining the end edge (A) of the shorter strip of the folded second sheet (3') to the end edge (C) of a second strip of the first folded sheet (2');
- joining an intermediate point (A") of the longer strip of the folded second sheet (3') to the end edge (C) of the second strip of the first folded sheet (2');
- joining the end edge (A') of the longer strip of the folded second sheet (3') to the end edge (B) of the first strip of the first folded sheet (2') and to the end edge (A) of the shorter strip of the folded second sheet (3'), thereby obtaining a pair of supporting feet (1',1'');
- laterally inserting the reaction chamber (4) into said second pocket (3), built by said folded second sheet (3').

9. Method for manufacturing a portable, handy, supple thermal container (1) according to any of the Claims 1 to 7, comprising the steps of:
- folding a first sheet (2') so as to obtain to a first pocket (2) having two strips of the same length ending with respective end edges (B, C);
- folding a second sheet (3') so as to obtain a second pocket (3) having two strips of the same length ending with respective end edges (A, A');
- inserting the folded second sheet (3') into the folded first sheet (2');
- joining the end edge (A) of a first strip of the folded second sheet (3') to the end edge (B) of a first strip of the first folded sheet (2');
- joining the end edge (A') of the second strip of the folded second sheet (3') to the end edge (C) of the second strip of the first folded sheet (2');
- inserting from the bottom the reaction chamber (4) into said second pocket (3), built by said folded second sheet (3').

10. Use of the portable, handy, supple thermal container (1) according to any one of the Claims from 1 to 7, in supple, handy and safe packaging for filling with fluid substances of every type and viscosity, particularly foods, edible and non-edible liquids.

11. Use of the portable, handy, supple thermal container (1) according to any one of the Claims from 1 to 7, as disposable dispenser of a consumer and/or necessity product, like soft drinks and drinkables, restoring, energy-giving, tonic, refreshing beverages for sport and free time; drinkable and liquid foods, sauces, creams and seasonings; baby foods, use as baby's bottle and dispensers by nourishing; cosmetics, body care applications, beauty, thermal and wellbeing treatments; ready-to-use medicines packets for drugs, therapeutics, adjuvant drugs, administration of therapeutic preparations and alimentary integrators for the health; provisioning rations and sanitary equipment for the Army; products, provisioning and first-aid goods for the disaster intervention civil force and the humanitarian interventions; industrial and construction products (like adhesives, sealing means, putties, plasters, paints, compounds and so on); hobby and do-it-yourself products, needing a minimum or preset temperature for their application/use.

12. Use of the portable, handy, supple thermal container (1) according to any one of the Claims from 1 to 7, to replace the thermal envelope in the supermarkets being able to carry frozen goods for a certain time from the dealer to the consumer, for instance milk, drinks or other goods.

13. Use of the portable, handy, supple thermal container (1) according to any one of the Claims from 1 to 7, for packaging for aerospace use: drinks, liquid and soluble foods, drinkable or sanitary water, creams, medicines necessity products and so on.

## Patentansprüche

1. Tragbarer, handlicher, biegsamer Thermalcontainer (1), für Selbstbedienung verbrauchbaren Präparaten, der eine selbst-erwärmende oder selbst-abkühlende Wärmeeinheit innen enthält, zusammengesetzt aus einem ersten Fach (2), Hülle oder Tasche, die die Handelsartikel (2") enthält, eine Reaktionskammer (4), die ein Reagens (5") und ein chemisches Reaktionsprodukt (5'), mit geeichter Freigabe und Kopplung, Mittel oder Wände zur Trennung zwischen des Reaktionsprodukt und den Produkte zur Vorbereitung und Verbrauch, der obengenannte biegsame Thermalcontainer (1) mit eingefügtem innerem Thermalausstauscher, geformt als Hülle oder Tasche mit einem zweiten Fach (3), in einem ersten Fach (2) eingeschoben, der obengenannte erste Fach (2) enthält die Handelsartikel (2"), der obengenannte zweite Fach (3) enthält Reaktionskammer (4), der für den Sitz der Reaktionskammer gedachte zweite Fach (3) wird durch Falten eines Blech (3') gebaut, der obengenannte biegsamer Thermalcontainer (1) hat eine Oberseite, die einen Auswuchs (7) trägt, eine der obengenannten Oberseite gegenübergestellte Unterseite und zwei Seitenfläche, die sich zwischen der obengenannten Oberseite und der obengenannten Unterseite ausdehnen, von der Tatsache charakterisiert, daß der obengenannte biegsame Thermalcontainer (1) ein Sicherheitsventil (6) enthält, um einen möglichen in der Reaktionskammer (4) erzeugten zu hohen Druck oder eine Überhitzung der Handelsartikel im ersten Fach mit Dampferzeugung zu überwachen, das obengenannte Sicherheitsventil leistet seine Funktion gleichzeitig für beiden ersten und zweiten Fach (2, 3), und von der Tatsache, daß das obengenannte Sicherheitsventil (6) mindestens einer der obengenannten Seitenfläche des Thermalcontainer (1) entlang steht, um dem überwiegenden seitlichen Brechen oder Zusammenbruch der obengenannten Fächer.

2. Tragbarer, handlicher, biegsamer Thermalcontainer (1) gemäß Anspruch 1, von der Tatsache charakterisiert, daß das obengenannte Sicherheitsventil (6) liegt mindestens einer Seitenflache entlang auf einer Stelle ungefähr auf der Mitte der Höhe des obengenannten zweiten Fach (3) liegend, der gedacht wird, die Reaktionskammer zu enthalten, d.h. auf ungefähr 1/4 der Lange des obengenannten Thermalcontainer (1), von seiner Unterseite an.

3. Tragbarer, handlicher, biegsamer Thermalcontainer (1) gemäß Anspruch 1 oder 2, von der Tatsache charakterisiert, daß das obengenannte Sicherheitsventil (6) aus einem geeichten Luftzug der Verbindungslinie besteht, die auf einer Stelle der obengenannten Seitenflache des ersten und des zweiten Fach (2) und (3) des Thermalcontainer (1) entlang liegt.

4. Tragbarer, handlicher, biegsamer Thermalcontainer (1) gemäß Anspruch 1, von der Tatsache charakterisiert, daß die obengenannten Reaktionskammer (4) das obengenannte Reagens (5") und die obengenannten chemischen Reaktionsprodukte (5') enthält und im obengenannten zweiten Fach (3) untergebracht wird, der aus einem Blech (3') besteht, das im ersten Fach (2) gefaltet wird und bei seinen Enden mit den Enden des obengenannten ersten Fach (2) verbunden.

5. Tragbarer, handlicher, biegsamer Thermalcontainer (1) gemäß einem beliebigen vorherigen Anspruch, von der Tatsache charakterisiert, daß die Reaktionskammer (4) im obengenannten zweiten Fach (3) von der Seite oder von dem Boden eingefügt wird.

6. Tragbarer, handlicher, biegsamer Thermalcontainer (1) gemäß einem beliebigen vorherigen Anspruch, von der Tatsache charakterisiert, daß das chemische Reaktionsprodukt (5") wie Pastillen oder Kapseln oder Tabletten oder Plättchen geformt wird, die von einer Schutzschicht bedeckt werden.

7. Tragbarer, handlicher, biegsamer Thermalcontainer (1) gemäß einem beliebigen vorherigen Anspruch, von der Tatsache charakterisiert, daß das Reagens (5') in einem Container (5) eingebaut wird und daß der Container (5) des Reagens (5') eine Blase von einer nicht-verdampfbaren und/oder Frostschutz- Flüssigkeit, die zusammenlegbare durch geeichte Belastung eine vorbestimmte Bruchlinie entlang ist.

8. Fabrikationsgang eines tragbaren, handlichen, biegsamen Thermalcontainer (1) gemäß einem beliebigen Anspruch von 1 bis 7, der die folgenden Schritte enthält:
- Falten eines ersten Blechs (2'), um einen ersten Fach (2) zu erzeugen, der zwei gleich langen Streifen hat, die mit jeweiligen Endkanten (B, C) zu Ende gehen;
- Falten eines zweiten Blechs (3'), um einen zweiten Fach (3) zu erzeugen, der der zwei ungleich langen Streifen hat, die mit jeweiligen Endkanten (A, A') zu Ende gehen;
- Einfügung des zweiten gefalteten Blechs (3') im ersten gefalteten Blech (2');
- Verbindung der Endkante (A) des kürzen Streifen des zweiten gefalteten Blechs (3') mit der Endkante (C) ein zweites Streifen des ersten gefalteten Blechs (2');
- Verbindung eines Zwischenpunkt (A") des längen Streifen des zweiten gefalteten Blechs (3') mit der Endkante (C) des zweiten streifen des ersten gefalteten Blechs (2');
- Verbindung der Endkante (A') des längen Streifen des zweiten gefalteten Blechs (3') mit der Endkante (B) des ersten Streifen des ersten gefalteten Blechs (2') und mit der Endkante (A) des kürzen Streifen des zweiten gefalteten Blechs (3'), so mit der Erlangung eines Paar Stutzfuße (1', 1") ;
- Seitliche Einfügung der Reaktionskammer (4) im obengenannten zweiten Fach (3), durch das obengenannte zweite gefaltete Blech gebaut (3').

9. Fabrikationsgang eines tragbaren, handlichen, biegsamen Thermalcontainer (1) gemäß einem beliebigen Anspruch von 1 bis 7, der die folgenden Schritte enthält:
- Falten eines ersten Blechs (2'), um einen ersten Fach (2) zu erzeugen, der zwei gleich langen Streifen hat, die mit jeweiligen Endkanten (B, C) zu Ende gehen;
- Falten eines zweiten Blechs (3'), um einen zweiten Fach (3) zu erzeugen, der der zwei gleich langen Streifen hat, die mit jeweiligen Endkanten (A, A') zu Ende gehen;
- Einfügung des zweiten gefalteten Blechs (3') im ersten gefalteten Blech (2');
- Verbindung der Endkante (A) eines ersten Streifen des zweiten gefalteten Blechs (3') mit der Endkante (B) eines ersten Streifen des ersten gefalteten Blechs (2');
- Verbindung der Endkante (A') des zweiten Streifen des zweiten gefalteten Blechs (3') mit der Endkante (C) des zweiten Streifen des ersten gefalteten Blechs (2');
- Einfügung der Reaktionskammer (4) vom Boden im obengenannten zweiten Fach (3), durch das obengenannte zweite gefaltete Blech gebaut (3').

10. Benützung des tragbaren, handlichen, biegsamen Thermalcontainer (1) gemäß einem beliebigen Anspruch von 1 bis 7, in biegsamer, handlicher und sicherer Verpackung zur Erfüllung mit flüssigen Stoffe jeder Art and Viskosität, insbesondere Nahrungsmittel, eßbaren und nicht-eßbaren Flüssigkeiten.

11. Benützung des tragbaren, handlichen, biegsamen Thermalcontainer (1) gemäß einem beliebigen Anspruch von 1 bis 7, insbesondere wie Einwegspender eines Handelsprodukts und/oder eines notwendigen Produkts, wie alkoholfreie Getränke und trinkbare Stoffe, Stärkungs-, Energiegebende-, Erfrischungs-, kräftigende Getränke für Sport und Freizeit; trinkbare und flüssige Nahrungsmittel, Soßen, Cremen und Alterung; Babynahrung, Benutzung als Babyflasche und Spender zur Nahrung; Kosmetikprodukte, Körperpflegeanwendungen, Schönheits-, thermal und Gesundheitsbehandlungen; Benutzungsbereite Medizinpakete für Arzneimittel, Therapeutische, Hilfsmittel, Verabreichung von therapeutischen Präparate und Nahrungsergänzungen für die Gesundheit; Proviant und sanitäre Ausrüstung für das Heer; Produkte, Proviant und Erste-Hilfe Ausrüstung für die Katastrophenschutz zivile Kraft und die humanitäre Eingriffe; Industrie- und Bauprodukte (wie Klebstoffe, Abdichtungen, Dichtungskitte, Verputz, Anstriche, Mischungen, usw.); Hobby und D-I-Y Produkte, die eine niedrige oder vorbestimmte Temperatur für ihre Anwendung/Benutzung brauchen.

12. Benutzung des tragbaren, handlichen, biegsamen Thermalcontainer (1) gemäß einem beliebigen Anspruch von 1 bis 7, um die thermische Tasche bei den Supermärkten zu ersetzen, mit der Fähigkeit, gefrorene Ware für einen bestimmten Zeitraum vom Verkäufer bis Kunde zu tragen, zum Beispiel Milch, Getränke oder andere Ware.

13. Benutzung des tragbaren, handlichen, biegsamen Thermalcontainer (1) gemäß einem beliebigen Anspruch von 1 bis 7, für Verpacken für Luftfahrt Benutzung: Getränke, flüssige und lösbare Lebensmittel, trinkbares oder gesundheitliches Wasser, Creme, Arzneimittel, Notwendigkeitsprodukte usw.

## Revendications

1. Conteneur thermique (1) portable, maniable, pliant pour préparations consommables libre-service, comprenant à l'intérieur une charge thermique autochauffante ou autorefroidissante, composé d'une première poche (2), enveloppe ou sac contenant le produit de consommation (2"), une chambre de réaction (4) contenant un réactif (5') et un produit de réaction chimique (5"), avec libération et combinaison calibrée, moyens ou parois pour séparer le produit de réaction des produits pour la préparation et la consommation, le susdit conteneur thermique pliant (1) avec l'échangeur thermique installé à l'intérieur en forme d'enveloppe ou sac avec une deuxième poche (3) interposée dans une première poche (2), la susdite première poche (2) contenant le produit de consommation (2"), la susdite deuxième poche (3) contenant la chambre de réaction (4), la deuxième poche (3) destinée à loger la chambre de réaction étant construite en pliant une feuille (3'), le susdit conteneur thermique pliant (1) ayant un côté supérieur supportant une saillie (7), un côté inférieur opposé au susdit côté supérieur et deux côtés latéraux s'étendant entre le susdit côté supérieur et le susdit côté inférieur, **caractérisé par le fait que** le susdit conteneur thermique pliant (1) comprend une soupape de sécurité (6) pour contrôler une possible excessive pression générée dans la chambre de réaction (4) ou une surchauffe du produit de consommation dans la première poche avec production de vapeurs, la susdite soupape de sécurité exécutant sa fonction dans le même temps pour toutes les deux poches, la première (2) et la deuxième (3), et **par le fait que** la susdite soupape de sécurité (6) est placée le long d'au moins un des susdits côtés latéraux du conteneur (1) à prévenir le bris ou le collapse surtout latéral des susdites poches.

2. Conteneur thermique portable, maniable, pliant (1) selon la revendication 1, **caractérisé par le fait que** la susdite soupape de sécurité (6) est placée le long d'au moins un des susdits côtés latéraux à un point situé approximativement à la hauteur de 1/2 de la susdite deuxième poche (3) destinée à loger la chambre de réaction, c'est-à-dire à peu près à 1/4 de la longueur du susdit conteneur (1), commençant de son côté inférieur.

3. Conteneur thermique portable, maniable, pliant (1) selon la revendication 1 ou 2, **caractérisé par le fait que** la susdite soupape de sécurité (6) est constituée d'un tirage calibré de la ligne de jonction placée à un point le long du susdit côté latéral de la première et de la deuxième poche (2) et (3) du conteneur (1).

4. Conteneur thermique portable, maniable, pliant (1) selon la revendication 1, **caractérisé par le fait que** la susdite chambre de réaction (4), qui contient le susdit réactif (5') et le susdit produit de réaction chimique (5"), est logée dans la susdite deuxième poche (3), qui est constituée d'une feuille (3') pliée à l'intérieur de la première poche (2) est jointe à son extrémité à l'extrémité de la susdite première poche (2).

5. Conteneur thermique portable, maniable, pliant (1) selon
une quelconque des revendications précédents, **caractérisé par le fait que** la chambre de réaction (4) est introduite du côté ou du fond dans la susdite deuxième poche (3) .

6. Conteneur thermique portable, maniable, pliant (1) selon
une quelconque des revendications précédents, **caractérisé par le fait que** le produit de la réaction chimique (5") est sous forme de pastilles ou capsules ou tablettes or wafers recouverts par un film protecteur.

7. Conteneur thermique portable, maniable, pliant (1) selon
une quelconque des revendications précédents, **caractérisé par le fait que** le réactif (5') est logé dans un conteneur (5) et **par le fait que** le conteneur (5) du réactif (5') est un globule de liquide non-évaporable et/ou antigel, qui peut collapser par une tension calibrée le long d'une ligne de rupture prédéterminée.

8. Méthode de fabrication d'un conteneur thermique portable, maniable, pliant (1) selon une quelconque des revendications de 1 à 7, comprenant les pas suivants:
- plier une première feuille (2') pour obtenir une première poche (2) ayant deux bandes de la même longueur se terminant avec les respectives bords terminaux (B, C);
- plier une deuxième feuille (3') pour obtenir une deuxième poche (3) ayant deux bandes de différente longueur se terminant avec les respectives bords terminaux (A, A');
- introduire la deuxième feuille pliée (3') dans la première feuille pliée (2');
- joindre le bord terminal (A) de la bande plus courte de la deuxième feuille pliée (3') au bord terminal (C) d'une deuxième bande de la première feuille pliée (2');
- joindre un point intermédiaire (A") de la bande plus longue de la deuxième feuille pliée (3) au bord terminal (C) d'une deuxième bande de la première feuille pliée (2')
- joindre le bord terminal (A') de la bande plus longue de la deuxième feuille pliée (3') au bord terminal (B) de la première bande de la première feuille pliée (2') et au bord terminal (A) de la bande plus courte de la deuxième feuille pliée (3'), et ainsi obtenant un couple de pieds de support (1',1");
- introduire du côté la chambre de réaction (4) dans la susdite deuxième poche (3), qui est constituée de la susdite deuxième feuille pliée (3').

9. Méthode de fabrication d'un conteneur thermique portable, maniable, pliant (1) selon une quelconque des revendications de 1 à 7, comprenant les pas suivants:
- plier une première feuille (2') pour obtenir une première poche (2) ayant deux bandes de la même longueur se terminant avec les respectives bords terminaux (B, C);
- plier une deuxième feuille (3') pour obtenir une deuxième poche (3) ayant deux bandes de la même longueur se terminant avec les respectives bords terminaux (A, A');
- introduire la deuxième feuille pliée (3') dans le première feuille pliée (2');
- joindre le bord terminal (A) d'une première bande de la deuxième feuille pliée (3') au bord terminal (B) d'une première bande de la première feuille pliée (2');
- joining the end edge (A') of the second strip of the folded second sheet (3') to the end edge (C) of the second strip of the first folded sheet (2');
- introduire du fond la chambre de réaction (4) dans la susdite deuxième poche (3), qui est constituée de la susdite deuxième feuille pliée (3').

10. Emploi du conteneur thermique portable, maniable, pliant (1) selon une quelconque des revendications de 1 à 7, dans un paquet pliant, maniable et sure à remplir par substances fluides de toute sorte et viscosité, particulièrement produits alimentaires, liquides comestibles et non-comestibles.

11. Emploi du conteneur thermique portable, maniable, pliant (1) selon une quelconque des revendications de 1 à 7, particulièrement comme distributeur éliminable d'un produit de consommation et/ou de nécessité, comme boissons et buvables non alcoolisées, boissons reconstituantes, énergétiques, toniques, rafraîchissantes pour le sport et le temps libre; produits alimentaires buvables et liquides, sauces, crèmes et
assaisonnements; produits alimentaires pour des babies, emploi comme bouteille pour babies et biberon; cosmétiques, applications pour le soin du corps, traitements de beauté, thermaux et de bien-être; paquets médicaux prêt-à-utiliser pour médicaments, thérapeutiques, médicaments adjuvants, administration de préparations thérapeutiques et intégrateurs alimentaires pour la santé; provisions alimentaires et equipment sanitaire pour l'Armée; produits, provisions alimentaires et equipment de secours d'urgence pour les forces de protection civile et les interventions humanitaires; produits pour l'industrie et la construction (comme adhésives, colles pour sceller, garnitures étanches, enduits, vernis, mélanges etc.); produits pour hobby et bricolage, qui ont besoin d'une température minimum ou préétablie pour leur application/emploi.

12. Emploi du conteneur thermique portable, maniable, pliant (1) selon une quelconque des revendications de 1 à 7, pour remplacer le sac thermique dans les supermarchés capable de porter choses congelées durant un certain temps du vendeur au consommateur, par exemple lait, boissons ou d'autres choses.

13. Emploi du conteneur thermique portable, maniable, pliant (1) selon une quelconque des revendications de 1 à 7, pour empaquetage pour emploi aéronautique: boissons, produits alimentaires liquides et solubles, eau potable ou sanitaire, produits de nécessité etc.
